# EUROPEAN PATENT APPLICATION

(11) **EP 4 403 476 A1**
(43) Date of publication of application: **24.07.2024**
(21) Application number: 22867834.8
(22) Date of filing: 19.09.2022
(51) Int. Cl.: B64G 1/40, F03H 1/00, H05H 1/54

(54) **STATIONARY ION/PLASMA ENGINE**

(30) Priority: 13.09.2021 UA 202105136
(71) Applicant: Chastnoe Aktsionernoe Obshchestvo "FED", Kharkov, 61023 (UA)
(72) Inventor: BOCHKARIOV, Aleksandr Volodimirovich, Kharkiv, 61171 (UA); KONONYHYN, Aleksandr Volodymyrovich, Kharkiv, 61123 (UA); POPOV, Viktor Vasyliovich, Kharkivska obl., 62340 (UA)
(74) Representative: Lichti - Patentanwälte Partnerschaft mbB
(86) International application number: PCT/UA2022/000055
(87) International publication number: WO 2023/038611

(57) **Abstract**

The invention relates to space technology and can be used in electric jet engines, as well as in vacuum-plasma apparatus. Proposed is a stationary ion/plasma engine comprising a magnetically conductive housing having mounted therein a discharge chamber with an annular ionization and acceleration channel, said chamber having an outer annular surface and an inner annular surface and being made of an electrically insulating material, the chamber having an open outlet on one side, and being coupled by its opposing, bottom side, to the magnetically conductive engine housing via a fastening means in the form of an annular metal cage; mounted inside the discharge chamber is a hollow annular gas distributing anode in communication with a reservoir of gaseous working fluid, and a cathode fastened to the magnetically conductive housing, the engine further having a magnetic system consisting of coils with magnetically conductive cores, and the magnetically conductive housing, wherein the outer and inner annular surfaces of the discharge chamber are described by wave-shaped generating lines which give rise to concentric grooves on the annular surfaces of the discharge chamber; the means for fastening the discharge chamber to the magnetically conductive engine housing is configured in the form of an annular metal cage with wave-shaped walls, which have a profile analogous to the profile of a wave-shaped generating line of the discharge chamber, and is fastened to the magnetically conductive housing with the aid of fastening elements, the wave-shaped walls of the cage surrounding the outer and inner annular surfaces of the discharge chamber; cut into the wave-shaped walls of the cage are slots that divide the walls into individual wave-shaped petals, wherein the wave-shaped petals of the cage contact with the cylindrical magnetically conductive housing and are pressed by the latter to the discharge chamber within the limits of elastic deformation of the petals. The proposed solution simplifies assembly of the ion/plasma engine, allowing automatic positioning of the discharge chamber in relation to the engine axis, while also protecting the discharge chamber against the effects of temperature deformation of the structural elements of the engine.

## Description

The invention relates to the field of space technology and can be used in electric jet engines, and also in vacuum-plasma process units.

Charged-particle and plasma-flow accelerators, on the basis of which Hall-effect stationary ion-plasma engines (SPEs) for space purposes are developed, are known and are used to solve various practical problems.

A stationary ion-plasma engine is known, which comprises a magnetically conductive housing, in which a discharge chamber with a ring-shaped ionization and acceleration channel is arranged, which has an outer and an inner cylindrical surface, is made of electrically insulating material and has an open outlet on one side, and on the opposite side is, via a fastening means, connected to the magnetically conductive housing of the engine, a hollow annular gas-distributing anode, which is in communication with a tank of gas propellant, and a cathode, which is fastened to the magnetically conductive housing, are arranged in the discharge chamber, wherein the engine has a magnetic system, which consists of coils with magnetically conductive cores and a magnetically conductive housing (Russian patent no. 2 527 898). In the known engine the means for fastening the discharge chamber to the magnetically conductive housing is embodied in the form of non-magnetic pins made of stainless steel, which are arranged in an insulating bushing in the wall of the discharge chamber.

However, tightly fastening the ceramic discharge chamber of the engine to the magnetically conductive housing using non-magnetic pins made of stainless steel, which has a high linear expansion coefficient (which is up to 20.1*10⁻⁶ °C⁻¹ at 1000°C for 12X18H10T steel, while for ceramic it is 1.3*10⁻⁶ °C⁻¹), will lead:
- either, when the engine is operating at high temperatures in the channel of the chamber (1000°C and higher), to a subassembly for fastening the chamber to a support being weakened (up to the point where the connection between linked components is broken and the traction vector of the engine is moved);
- or to significant compressive strains arising in the ceramic material of the discharge chamber when it cools after the engine is switched off, which can cause it to be destroyed.

A stationary ion-plasma engine is known, which comprises a magnetically conductive housing, in which a discharge chamber with a ring-shaped ionization and acceleration channel is arranged, which has an outer and an inner cylindrical surface, is made of electrically insulating material and has an open outlet on one side and on the opposite side is, via a fastening means, connected to the magnetically conductive housing of the engine, a hollow annular gas-distributing anode, which is in communication with a tank of gas propellant, and a cathode, which is fastened to the magnetically conductive housing, are arranged in the discharge chamber, wherein the engine has a magnetic system, which consists of coils with magnetically conductive cores and a magnetically conductive housing. An engine with such a structure (for example, SPT-100) is described in the dissertation ISSLEDOVANIE KHARAKTERISTIK STATSIONARNYKH PLAZMENNYKH DVIGATELEI PRI DLITELNOI RABOTE [AN INVESTIGATION OF THE CHARACTERISTICS OF STATIONARY PLASMA ENGINES DURING EXTENDED OPERATION] (UDC 629.7.036.7, manuscript copyright, Sergei Jurevich Pridannikov, ISSLEDOVANIE KHARAKTERISTIK STATSIONARNYKH PLAZMENNYKH DVIGATELEI PRI DLITELNOI RABOTE [AN INVESTIGATION OF THE CHARACTERISTICS OF STATIONARY PLASMA ENGINES DURING EXTENDED OPERATION], Speciality 05.07.05 - "Teplovye, elektroraketnye dvigateli i energeticheskie ustanovki letatelnykh apparatov [Heat and electric jet engines and power units of aircraft]", ABSTRACT of a dissertation for the grade of Candidate of Engineering Sciences, Kaliningrad, 2003. The work was carried out at the Federal State Unitary Enterprise, the Experimental Design Studio "Fakel", in the city of Kaliningrad).

In the chapter "Osnovnye polozheniya [Basic concepts]" of said dissertation, in paragraph 2 it is stated that a method for designing an SPT taking account of the thermal state of the structure has been developed, but structurally the ceramic discharge chamber in the engine described is fastened using a bridging metal cage, which still also enables large internal strains to arise in the chamber at high temperatures. The form of the bridging metal cage is not disclosed in the abstract.

In this way, the method developed for designing an SPT makes it possible to assess the influence of the thermal state of the engine, but does not eliminate the drawbacks of its structure.

A stationary plasma engine is known, which comprises a magnetically conductive housing, in which a discharge chamber with a ring-shaped ionization and acceleration channel is arranged, which has an outer and an inner cylindrical surface, is made of electrically insulating material and has an open outlet on one side and on the opposite side is, by an annular metal cage via a fastening means, connected to the magnetically conductive housing of the engine, a hollow annular gas-distributing anode, which is in communication with a tank of gas propellant, and a cathode, which is fastened to the magnetically conductive housing, are arranged in the discharge chamber, wherein the engine has a magnetic system, which consists of coils with magnetically conductive coils and a magnetically conductive housing.

The ceramic discharge chamber is embodied, as a rule, in the form of a monolithic component with an annular slot which forms the acceleration channel.

The discharge chamber is fastened to the magnetic system using a bridging metal cage which, as an element with increased heat resistance, reduces the amount of heat transferred from the anode and ceramic chamber to the magnetic system. (Report "Raschetnye issledovaniya magnitnogo polya v uskoritelnom kanale SPD-70 [Design investigations of the magnetic field in the acceleration channel of an SPT-70]", 2008, Moscow aviation institute, dept. 208) (https://elcut.ru/publications/khartov1.pdf).

However, the metal cage, which encloses the ceramic chamber and has a metallic linear expansion coefficient which differs significantly from the linear expansion coefficient of the ceramic chamber, enables large internal strains to arise therein when the engine operates at high temperatures (up to the point where the chamber is destroyed). The form of the bridging metal cage is not disclosed in the document.

This stationary ion-plasma engine is selected as the closest prior art.

The problem addressed by the invention is that of creating a structure of a stationary plasma engine in which a ceramic discharge chamber would be fully freed from temperature deformations of structural elements of the engine, wherein the positioning of the discharge chamber with respect to the axis of the engine would be unambiguous in any operating conditions, and assembling the engine would be made simpler.

The problem posed is solved in that, in a stationary ion-plasma engine, which comprises a magnetically conductive housing, in which a discharge chamber with a ring-shaped ionization and acceleration channel is arranged, which has an outer and an inner annular surface, is made of electrically insulating material and has an open outlet on one side and on the opposite, bottom side is, via a fastening means, embodied in the form of an annular metal cage, connected to the magnetically conductive housing of the engine, a hollow annular gas-distributing anode, which is in communication with a tank of gas propellant, and a cathode, which is fastened to the magnetically conductive housing, are arranged in the discharge chamber, wherein the engine has a magnetic system, which consists of coils with magnetically conductive cores and a magnetically conductive housing; **according to the invention** the outer and the inner annular surface of the discharge chamber are described by wave-shaped generating lines which create concentric slots on the annular surfaces of the discharge chamber, the means for fastening the discharge chamber to the magnetically conductive housing of the engine is embodied in the form of an annular metal cage with wave-shaped walls which have a profile similar to the profile of a wave-shaped generating line of the discharge chamber, is fastened to the magnetically conductive housing using fastening elements, encloses, with its wave-shaped walls, the outer and the inner annular surface of the discharge chamber, with slots which separate the walls into separate wave-shaped petals being cut into the wave-shaped walls of the cage, wherein the wave-shaped petals of the cage are in contact with the cylindrical magnetically conductive housing and are pressed by the latter against the discharge chamber within the limits of the elastic deformation of the petals.

A wave-shaped generating line of the discharge chamber is advantageously in the form of a sinusoid.

The annular metal cage is advantageously manufactured from material with a minimal linear expansion coefficient.

The annular metal cage is fastened to the magnetically conductive housing by means of a screw and nut, which screw is embodied in the form of a separate component or welded to the cage.

The claimed features are essential and are mutually connected to form a stable set of essential features which is sufficient for obtaining the required technical result.

The technical result of the invention is to make it simpler to assemble an ion-plasma engine by automatically positioning its discharge chamber with respect to the axis of the engine while simultaneously freeing the discharge chamber from temperature deformations of the structural elements of the engine.

The invention is illustrated by the drawings, in which show:
- Fig. 1: A stationary ion-plasma engine in cross section;
- Fig. 2: A discharge chamber together with a metal cage in cross section;
- Fig. 3: A metal cage with wave-shaped petals; and
- Fig. 4: A metal cage with wave-shaped petals and slots between them (top view).

The proposed stationary ion-plasma engine comprises a magnetically conductive housing 1, in which a discharge chamber 2 with a ring-shaped ionization and acceleration channel 3 is arranged. The discharge chamber 2 is made of electrically insulating material and has an outer and an inner annular surface 4 and 5. The discharge chamber has an open outlet 6 on one side and on the opposite side is, via a fastening means embodied in the form of an annular metal cage 7, connected to the magnetically conductive housing 1 of the engine using fastening elements 8 and 9. A hollow annular gas-distributing anode 10, which is in communication with a tank of gas propellant (the tank is not shown specifically), and a cathode (which is not shown specifically), which is fastened to the magnetically conductive housing 1 using a bracket 11, are arranged in the discharge chamber 2.

In the proposed variant, the cathode is fastened to the magnetically conductive housing 1 using a bracket 11 to the side of the engine. However, it can be arranged either to the side of the engine or on the central axis of the engine. In practice both variant arrangements of the cathode are used.

The stationary ion-plasma engine has a magnetic system, which consists of coils with magnetically conductive cores 12 and 13 and a magnetically conductive housing 1. The outer and the inner annular surface 4 and 5 of the discharge chamber 1 are described by wave-shaped generating lines which create concentric slots 14 on the annular surfaces of the discharge chamber. A wave-shaped generating line of the discharge chamber 2 is advantageously in the form of a sinusoid. The annular discharge chamber 2 is enclosed by the annular metal cage 7, which is fastened to the magnetically conductive housing 1 using fastening elements 8 and 9. The annular metal cage 7 is manufactured from material with a minimal linear expansion coefficient. It encloses, with its wave-shaped walls, the outer wave-shaped surface 4 and inner wave-shaped surface 5 of the ring-shaped discharge chamber, and has a profile of annular wave-shaped walls, which is similar to the profile of the concentric slots of the discharge chamber. Grooves 15 which separate the walls into separate wave-shaped petals 16 and 17 are made in the wave-shaped walls of the cage, wherein the wave-shaped petals of the cage are in contact with the cylindrical magnetically conductive housing 1 and are pressed by the latter against the discharge chamber 2 within the limits of the elastic deformation of the petals 16 and 17. Openings 18 which serve to accommodate the fastening elements 8 by means of which the cage 7 is fastened to the magnetically conductive housing 1, and also large-diameter openings 19 which serve for elements of the anode 10, which are under a potential (voltage) and provide a necessary insulating gap between these elements and the cage 7, to pass through, are made in the flat bottom base of the cage 7.

The fastening elements in the form of screws 8, by means of which the cage 7 is fastened to the magnetically conductive housing 1, can be embodied in the form of separate screws, the diameter of the head 20 of which is larger than the diameter of an opening 18, or are welded (which is not shown specifically) to the bottom part of the cage 7. In the event that the head 20 is accommodated between the discharge chamber 2 and the cage 7, a recess 21 with dimensions which exceed the dimensions of the head, taking into account changes in dimensions during heating, is provided for the head 20.

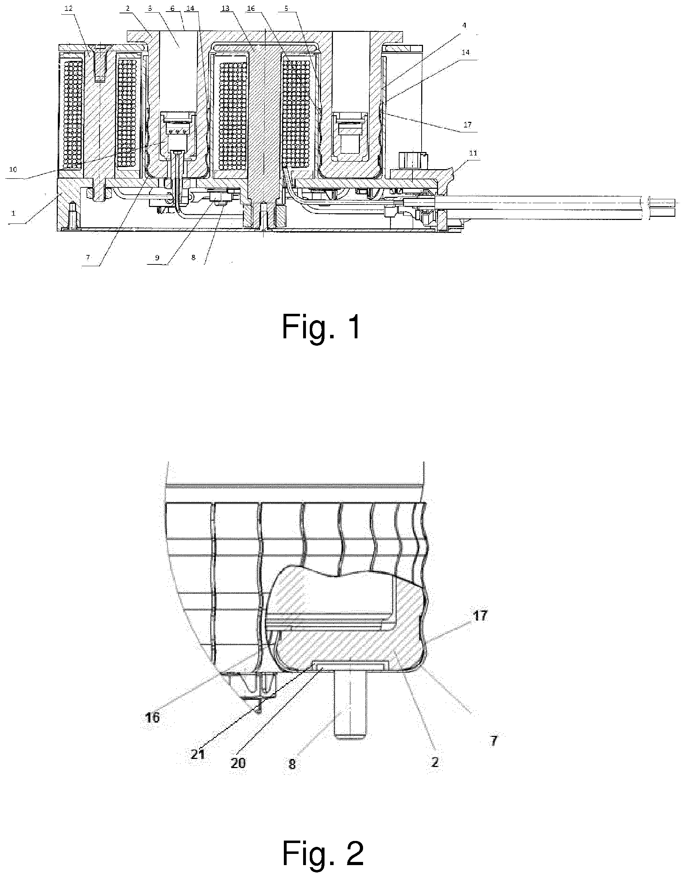

The stationary ion-plasma engine with an innovative subassembly for fastening the discharge chamber to the magnetically conductive housing proposed in the invention operates in the following way:
The discharge chamber 2 together with the metal cage 7 (fig. 1) is inserted into the magnetically conductive housing 1 in such a way that the petals 16 and 17 of the cage 7 are in contact both with the cylindrical surfaces of the magnetically conductive housing 1 around their whole circumference and with the concentric slots 14 of the discharge chamber 2, and is fastened to the magnetically conductive housing 1 by screws 8. In view of the fact that the generating lines of the external surfaces of the outer petals 17 and of the inner surfaces of the inner petals 16 of the cage 7 have diameters which differ from the diameters of the cylindrical surfaces of the magnetically conductive housing 1, and specifically a generating line of the outer petals 17 has a somewhat larger diameter than the diameter of the outer cylindrical surface of the magnetically conductive housing 1, and a generating line of the inner petals 16 has a somewhat smaller diameter than the diameter of the inner cylindrical surface of the magnetically conductive housing 1, the petals change, within the limits of elastic deformation, their initial geometric dimensions and ensure the discharge chamber 2 is tightly fastened to the magnetically conductive housing 1 at the same time as being automatically centered with respect to the axis of the ion-plasma engine.

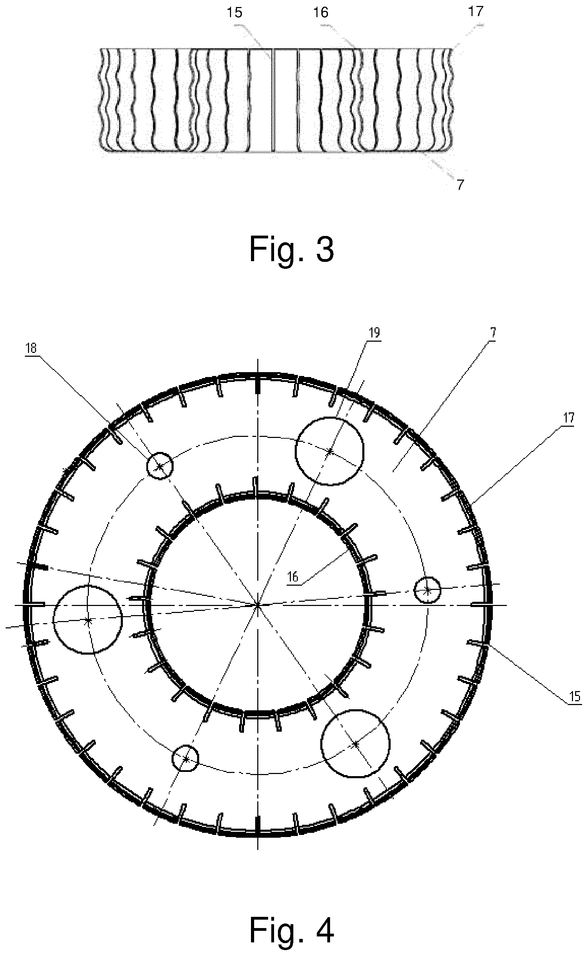

The grooves in the walls of the metal cage 7, which separate the walls into the separate wave-shaped petals 16 and 17, are made so that they stop at a flat base of the cage 7 which is not less than 0.5 mm in size in order to exclude the presence of closed loops in the side walls of the cage 7, which can create a force action on the discharge chamber when they undergo heat deformations (fig. 4) .

The metal cage 7 is fastened to the magnetic core 1 using the fastening elements 8 and 9 along with spring balancing spacers which eliminate the influence of heat deformations of the fastening elements 8.

The proposed embodiment of a stationary ion-plasma engine makes it simpler to assemble the ion-plasma engine by automatically positioning its discharge chamber with respect to the axis of the engine while simultaneously freeing the discharge chamber from temperature deformations of structural elements of the engine.

The structure of the cage 7 with separate petals 16 and 17 excludes a force action of the cage 7 on the discharge chamber 2 when the diameters of the generating lines of the petals 16 and 17 are changed when the engine is in operation, i.e. when the cage is heated to high temperatures (1000°C and higher). The wave-shaped petals 16 and 17, which have wave-curvature radii which are somewhat smaller than the radii of the concentric slots 14 in the discharge chamber 2, also have the ability to move along the axis of the engine when it is heated in the process of operation to critically high temperatures, which ensures the difference in temperature linear expansion coefficients between the material of the metal cage 7 and the material of the ceramic discharge chamber 2 is compensated for without interfering with the positioning of the chamber 2 with respect to the magnetically conductive housing 1.

The claimed structure of the stationary ion-plasma engine, which has made it possible to make it simpler to assemble, has been tested in practice on experimental engines and proved to be reliable.

## Claims

1. A stationary ion-plasma engine, which comprises a magnetically conductive housing, in which a discharge chamber with a ring-shaped ionization and acceleration channel is arranged, which has an outer and an inner annular surface, is made of electrically insulating material and has an open outlet on one side and on the opposite, bottom side is, via a fastening means, embodied in the form of an annular metal cage, connected to the magnetically conductive housing of the engine, a hollow annular gas-distributing anode, which is in communication with a tank of gas propellant, and a cathode, which is fastened to the magnetically conductive housing, are arranged in the discharge chamber, wherein the engine has a magnetic system, which consists of coils with magnetically conductive cores and a magnetically conductive housing, **characterized in that** the outer and the inner annular surface of the discharge chamber are described by wave-shaped generating lines which create concentric slots on the annular surfaces of the discharge chamber, the means for fastening the discharge chamber to the magnetically conductive housing of the engine is embodied in the form of an annular metal cage with wave-shaped walls which have a profile similar to the profile of a wave-shaped generating line of the discharge chamber, is fastened to the magnetically conductive housing using fastening elements, encloses, with its wave-shaped walls, the outer and the inner annular surface of the discharge chamber, with slots which separate the walls into separate wave-shaped petals being cut into the wave-shaped walls of the cage, wherein the wave-shaped petals of the cage are in contact with the cylindrical magnetically conductive housing and are pressed by the latter against the discharge chamber within the limits of the elastic deformation of the petals.

2. The stationary ion-plasma engine as claimed in claim 1, **characterized in that** a wave-shaped generating line of the discharge chamber is in the form of a sinusoid.

3. The stationary ion-plasma engine as claimed in either one of claims 1 and 2, **characterized in that** the annular metal cage is manufactured from material with a minimal linear expansion coefficient.

4. The stationary ion-plasma engine as claimed in any one of claims 1-3, **characterized in that** the annular metal cage is fastened to the magnetically conductive housing by means of a screw and nut.

5. The stationary ion-plasma engine as claimed in claim 4, **characterized in that** the annular metal cage is fastened to the magnetically conductive housing by means of a screw and nut, which screw is welded to the cage.
